# EUROPEAN PATENT APPLICATION

(11) **EP 4 464 749 A1**
(43) Date of publication of application: **20.11.2024**
(21) Application number: 23740257.3
(22) Date of filing: 11.01.2023
(51) Int. Cl.: C08L 101/00, C08L 27/12, C08L 71/10, C08L 81/02

(54) **RESIN COMPOSITION, MOLDED BODY, COMPOSITE, AND USE THEREOF**

(30) Priority: 12.01.2022 JP 2022003102
(71) Applicant: AGC INC., Chiyoda-ku, Tokyo 1008405 (JP)
(72) Inventor: NISHI, Mai, Tokyo 100-8405 (JP); OCHI, Yousuke, Tokyo 100-8405 (JP); ABE, Masatoshi, Tokyo 100-8405 (JP); SASAKI, Toru, Tokyo 100-8405 (JP); YODOGAWA, Masahide, Tokyo 100-8405 (JP)
(74) Representative: Müller-Boré & Partner Patentanwälte PartG mbB
(86) International application number: PCT/JP2023/000363
(87) International publication number: WO 2023/136248

(57) **Abstract**

The present invention provides: a resin composition that yields a molded article excellent in impact resistance and exhibits excellent moldability; a molded article obtained by molding the resin composition; a composite having the molded article; and a use thereof.

The resin composition of the present invention contains at least one type of melt-moldable thermoplastic resin A selected from the group consisting of polyarylate, polyether sulfone, polyaryl sulfone, aromatic polyetheramide, aromatic polyetherimide, polyphenylene sulfide, polyaryletherketone, polyamideimide, and liquid crystal polyesters; and a fluorine-containing elastomer B having a terminal functional group. The volume ratio of the thermoplastic resin A and the fluorine-containing elastomer B is from 99:1 to 50:50; and the fluorine-containing elastomer B is dispersed in the thermoplastic resin A. The molded article or the like of the present invention can be obtained from the resin composition.

## Description

### [Technical Field]

The present invention relates to a resin composition, a molded article, a composite, and a use thereof.

### [Background Art]

Heat-resistant thermoplastic resins such as polyaryletherketone are widely used in various fields as materials for molded articles. However, molded articles of polyaryletherketone have insufficient impact resistance at room temperature or low temperatures. Further, molded articles of polyaryletherketone have insufficient flexibility depending on the intended use.

The following resin composition has been proposed as a resin composition from which a molded article of polyaryletherketone having improved impact resistance can be obtained.
- A resin composition containing a polyaryletherketone and a fluorine-containing elastomer, wherein the fluorine-containing elastomer is dispersed in the polyaryletherketone, a number average particle diameter of the fluorine-containing elastomer is from 1 to 300 µm, a volume ratio of the polyaryletherketone and the fluorine-containing elastomer is from 97:3 to 55:45, and a flexural modulus is from 1,000 to 3,700 MPa (Patent Document 1).

### [Citation List]

### [Patent Document]

[Patent Document 1] International Patent Publication No. 2017/188280

### [Summary of Invention]

### [Technical Problem]

However, the resin composition of Patent Document 1 may have insufficient moldability during thermoforming.

The present invention provides: a resin composition that yields a molded article excellent in impact resistance and exhibits excellent moldability; a molded article obtained by molding the aforementioned resin composition; a composite having the aforementioned molded article; and a use thereof.

### [Solution to Problem]

The present invention includes the following aspects.
[1] A resin composition comprising: the following thermoplastic resin A and a fluorine-containing elastomer B having a terminal functional group; wherein a volume ratio of the aforementioned thermoplastic resin A and the aforementioned fluorine-containing elastomer B is from 99:1 to 50:50; and the aforementioned fluorine-containing elastomer B is dispersed in the aforementioned thermoplastic resin A.
   (Thermoplastic resin A)
   A melt-moldable heat-resistant thermoplastic resin of at least one member selected from the group consisting of polyarylate, polyether sulfone, polyaryl sulfone, aromatic polyetheramide, aromatic polyetherimide, polyphenylene sulfide, polyaryletherketone, polyamideimide, and liquid crystal polyesters.
[2] The resin composition according to [1], wherein the aforementioned thermoplastic resin A is at least one selected from the group consisting of polyphenylene sulfide and polyaryletherketone.
[3] The resin composition according to [1] or [2], wherein the aforementioned terminal functional group is at least one selected from the group consisting of an iodine atom, an epoxy group, and an acid anhydride group.
[4] The resin composition according to any one of [1] to [3], wherein a volume ratio of the aforementioned thermoplastic resin A and the aforementioned fluorine-containing elastomer B is from 95:5 to 60:40.
[5] The resin composition according to any one of [1] to [4], wherein a melt flow rate MFR of the aforementioned resin composition is 1 g/10 minutes or more at a temperature of 372°C and a load of 49 N.
[6] The resin composition according to any one of [1] to [5], wherein a ratio of a melt flow rate MFR_{A} of the thermoplastic resin A at a temperature of 372°C and a load of 49N and a melt flow rate MFR_{B} of the fluorine-containing elastomer B at a temperature of 230°C and a load of 21N (MFR_{A}/MFR_{B}) is 300 or less.
[7] The resin composition according to any one of [1] to [6], which has a weld strength of 48 MPa or more.
[8] A molded article obtained by molding the resin composition according to any one of [1] to [7].
[9] A composite obtained by combining or laminating the molded article according to [8] and another material other than the aforementioned molded article.

### [Advantageous Effects of Invention]

According to the resin composition of the present invention, a molded article with excellent impact resistance can be obtained. Further, the resin composition of the present invention exhibits excellent moldability.

The molded article of the present invention exhibits excellent impact resistance. Further, the molded article of the present invention also exhibits excellent stress crack resistance.

The composite of the present invention comprises a molded article excellent in impact resistance and stress crack resistance.

### [Description of Embodiments]

The meanings of the terms are as follows.

A compound represented by a formula 1 will be referred to as a "compound 1". Compounds represented by other formulae are also described in the same manner.

A "monomer" means a compound having a polymerizable carbon-carbon double bond.

A "unit based on a monomer" is a generic term for an atomic group formed directly by polymerization of one molecule of the monomer, and an atomic group obtained by chemically converting a portion of this directly formed atomic group.

A unit based on a monomer is simply referred to as a "monomeric unit. "For example, a unit based on ethylene is referred to as an "ethylene unit."

The "volume" of a thermoplastic resin or fluorine-containing elastomer is a value calculated by dividing the mass (g) of the thermoplastic resin or fluorine-containing elastomer by its specific gravity (g/cm³).

The "specific gravity" of a thermoplastic resin or fluorine-containing elastomer is a value measured at 23°C by an underwater displacement (suspension) method.

The "number average particle diameter" of a fluorine-containing elastomer is an average value of the maximum diameter of 100 particles each randomly selected under optical microscopy.

The phrase "melt-moldable" means exhibition of melt fluidity.

The expression "exhibition of melt fluidity" means that there exists a temperature at which the melt flow rate is from 0.1 to 1,000 g/10 minutes within a temperature range equal to or higher than the melting point of the resin by 20°C under a condition of a load of 49N.

The term "melting point" is a temperature corresponding to the maximum value of the melting peak as measured by differential scanning calorimetry (DSC).

The term "melt flow rate" is a melt mass flow rate (MFR) prescribed in JIS K 7210-1:2014 (corresponding international standard: ISO 1133-1:2011). The conditions for measuring MFR are as described in Examples.

The expression "end of a polymer chain" is a concept that includes both the end of the main chain and the end of a branched chain.

The term "main chain" refers to the main carbon chain of a chain compound, and means a trunk portion with the maximum number of carbon atoms.

The term "acid anhydride group" means a group represented by -C(=O)-O-C(=O)-.

The "fluorine content" of a fluorine-containing elastomer indicates the proportion of the mass of fluorine atoms with respect to the total mass of all atoms constituting the fluorine-containing elastomer B. The fluorine content is calculated from the molar ratio of each unit in the fluorine-containing elastomer determined by the melt NMR measurement and the total fluorine content measurement.

The "storage modulus G‴ is a value measured under conditions of 100°C and 50 cpm in accordance with ASTM D6204.

The "Mooney viscosity (ML_{1 + 10}, 121°C)" is a value measured at 121°C in accordance with JIS K6300-1:2000 (corresponding international standards: ISO 289-1:2005, ISO 289-2:1994).

The "tensile strength" and the "tensile elongation" are determined by the methods described in Examples.

The "flexural strength" and the "flexural modulus" are determined by the methods described in Examples.

The "Izod impact strength" is determined by the method described in Examples.

The "weld strength" is determined by the method described in Examples.

A symbol "-" indicating a numerical range means that numerical values described before and after this symbol are included as the lower limit value and the upper limit value.

The numerical ranges disclosed in the present specification can be made into new numerical ranges by arbitrarily combining the lower limit and upper limit values thereof.

### <Resin composition>

The resin composition of the present invention comprises the following thermoplastic resin A and a fluorine-containing elastomer B having a terminal functional group. The resin composition of the present invention may further contain components other than the thermoplastic resin A and the fluorine-containing elastomer B, as long as the effects of the invention are not impaired.

Thermoplastic resin A: a melt-moldable heat-resistant thermoplastic resin of at least one member selected from the group consisting of polyarylate, polyether sulfone, polyaryl sulfone, aromatic polyetheramide, aromatic polyetherimide, polyphenylene sulfide, polyaryletherketone, polyamideimide, and liquid crystal polyesters.

A volume ratio (A/B) of the thermoplastic resin A and the fluorine-containing elastomer B is from 99:1 to 50:50, preferably from 95:5 to 60:40, more preferably from 95:5 to 65:35, still more preferably from 90:10 to 70:30, and particularly preferably from 95:5 to 70:30.

Since the proportion of the volume of the fluorine-containing elastomer B is equal to or more than the lower limit value of the above volume ratio range, a molded article having excellent impact resistance, flexibility, and stress crack resistance can be obtained. Since the proportion of the volume of the fluorine-containing elastomer B is equal to or less than the upper limit value of the above volume ratio range, a molded article having excellent heat resistance and mechanical properties can be obtained. Further, the effect of improving the weld strength is also easily obtained. The weld strength will be described later.

Of the volume of the resin composition, the sum of the volume of the thermoplastic resin A and the volume of the fluorine-containing elastomer B is preferably from 50 to 100% by volume, more preferably from 60 to 99% by volume, and still more preferably from 70 to 97% by volume.

When the sum of the volume of the thermoplastic resin A and the volume of the fluorine-containing elastomer B is equal to or more than the lower limit value of the above range, the molded article tends to exhibit sufficient heat resistance, mechanical properties, flexibility, and impact resistance. When the sum of the volume of the thermoplastic resin A and the volume of the fluorine-containing elastomer B is equal to or less than 99% by volume, new characteristics derived from other components can be easily imparted to the resin composition and molded article.

Of the volume of the resin composition, the sum of the volume of other components is preferably from 0 to 50% by volume, more preferably from 1 to 40% by volume, and still more preferably from 3 to 30% by volume.

In the resin composition of the present invention, the fluorine-containing elastomer B having a terminal functional group is dispersed in the thermoplastic resin A. Therefore, the moldability of the resin composition is improved. Further, the excellent characteristics of the thermoplastic resin A, such as heat resistance, are likely to be exhibited.

The number average particle diameter of the fluorine-containing elastomer B dispersed in the thermoplastic resin A is preferably from 0.5 to 10 µm, and more preferably from 1 to 5 µm. When the number average particle diameter of the fluorine-containing elastomer B is equal to or more than the lower limit value of the above range, the resin composition exhibits even better moldability. Further, the molded article exhibits even better impact resistance. When the number average particle diameter of the fluorine-containing elastomer B is equal to or less than the upper limit value of the above range, the dispersion uniformity of the fluorine-containing elastomer B is excellent. Further, when the number average particle diameter of the fluorine-containing elastomer B is equal to or less than the upper limit value of the above numerical range, a molded article having excellent stress crack resistance can be easily obtained.

The thermoplastic resin A is a melt-moldable heat-resistant thermoplastic resin of at least one member selected from the group consisting of polyarylate, polyether sulfone, polyaryl sulfone, aromatic polyetheramide, aromatic polyetherimide, polyphenylene sulfide, polyaryletherketone (hereinafter also referred to as "PAEK"), polyamideimide, and liquid crystal polyesters.

One type of thermoplastic resin A may be used alone, or two or more types thereof may be used in combination, and it is preferred to use one type alone.

From the viewpoints of mechanical properties and heat resistance, the thermoplastic resin A is preferably at least one selected from the group consisting of polyphenylene sulfide and PAEK, and PAEK is more preferred.

From the viewpoints of mechanical properties and heat resistance, PAEK is preferably polyether ketone (hereinafter also referred to as "PEK"), polyether ether ketone (hereinafter also referred to as "PEEK"), or polyether ketone ketone (hereinafter also referred to as "PEKK"), and PEEK is particularly preferred.

One type of PAEK may be used alone or two or more types thereof may be used in combination, and it is preferred to use one type alone.

The melting point of the thermoplastic resin A is preferably from 200 to 430°C, more preferably from 250 to 400°C, and still more preferably from 280 to 380°C. When the melting point of the thermoplastic resin A is equal to or more than the lower limit value of the above range, the molded article exhibits excellent heat resistance. When the melting point of the thermoplastic resin A is equal to or less than the upper limit value of the above range, deterioration of physical properties due to thermal decomposition of the fluorine-containing elastomer B during melt-kneading can be suppressed, and characteristics of the fluorine-containing elastomer B (flexibility, impact resistance, chemical resistance, and the like) are easily maintained.

The thermoplastic resin A may be one which is commercially available, or may be one synthesized from various raw materials by various methods.

Examples of commercially available PEEK products include Victrex PEEK (manufactured by Victrex plc.), VESTAKEEP series (manufactured by Daicel-Evonik Ltd.), and Ketaspire (manufactured by Solvay Specialty Polymers).

Examples of commercially available PEKK products include Kepstan (manufactured by Arkema S.A.).

The fluorine-containing elastomer B is a fluorine-containing elastic copolymer having no melting point and exhibiting a storage modulus G' of 80 or more at 100°C and 50 cpm, and is distinguished from a fluororesin.

The fluorine-containing elastomer B has a terminal functional group. Therefore, the moldability of the resin composition is improved.

The terminal functional group of the fluorine-containing elastomer B may be bonded to the end of the polymer chain of the fluorine-containing elastomer B, may be bonded to a side group, or may be bonded to both the end of the polymer chain and a side group of the polymer chain. The terminal functional group is preferably bonded to at least the end of the polymer chain of the fluorine-containing elastomer B from the viewpoint of moldability.

The terminal functional group is preferably at least one selected from the group consisting of an iodine atom, an epoxy group, and an acid anhydride group, and more preferably an iodine atom, from the viewpoint of moldability.

The content of the terminal functional group of the fluorine-containing elastomer B is not particularly limited.

When the fluorine-containing elastomer B has, for example, an iodine atom as a terminal functional group, the content of the iodine atom as a terminal functional group is preferably from 0.01 to 5.0% by mass, more preferably from 0.05 to 2.0% by mass, and still more preferably from 0.05 to 1.0% by mass with respect to the total mass of the fluorine-containing elastomer B.

When the content of the iodine atom is equal to or more than the lower limit value of the above numerical range, the resin composition exhibits even better moldability. When the content of the iodine atom is equal to or less than the upper limit value of the above numerical range, the fluorine-containing elastomer B can be easily obtained.

Since the resin composition of the present invention contains the fluorine-containing elastomer B, a molded article with excellent impact resistance can be obtained.

As the fluorine-containing elastomer B having a terminal functional group, a fluorine-containing elastic copolymer having one or more units based on the following monomer m1 is preferred.

The monomer m1 is at least one monomer selected from the group consisting of tetrafluoroethylene (hereinafter also referred to as "TFE"), hexafluoropropylene (hereinafter also referred to as "HFP"), vinylidene fluoride (hereinafter also referred to as "VdF"), and chlorotrifluoroethylene (hereinafter also referred to as "CTFE").

One type of monomer m1 may be used alone, or two or more types thereof may be used in combination, and it is preferred to use one type alone.

The fluorine-containing elastomer B having a terminal functional group may be a fluorine-containing elastic copolymer having two or more types of monomer m1 units, or may be a fluorine-containing elastic copolymer having one or more types of monomer m1 units and one or more types of units based on the following monomer m2 copolymerizable with the monomer m1.

The monomer m2 is at least one monomer selected from the group consisting of ethylene (hereinafter also referred to as "E"), propylene (hereinafter also referred to as "P"), perfluoro(alkyl vinyl ether) (hereinafter also referred to as "PAVE"), vinyl fluoride (hereinafter also referred to as "VF"), 1,2-difluoroethylene (hereinafter also referred to as "DiFE"), 1, 1,2-trifluoroethylene (hereinafter also referred to as "TrFE"), 3,3,3-trifluoro-1-propylene (hereinafter also referred to as "TFP"), 1,3,3,3-tetrafluoropropylene, and 2,3,3,3-tetrafluoropropylene.

PAVE is a compound 1 described below.

CF₂=CF(OR^{F}) Formula 1

In the Formula 1, R^{F} is a linear or branched perfluoroalkyl group having 1 to 10 carbon atoms.

Examples of PAVE include perfluoro(methyl vinyl ether) (hereinafter also referred to as "PMVE"), perfluoro(ethyl vinyl ether), perfluoro(propyl vinyl ether) (hereinafter also referred to as "PPVE"), and perfluoro(butyl vinyl ether). Among these, as PAVE, PMVE and PPVE are preferred, and PMVE is more preferred. One type of PAVE may be used alone, or two or more types thereof may be used in combination.

The fluorine-containing elastomer B having a terminal functional group may have one or more units based on the following monomer m3 copolymerizable with the monomer m1. The monomer m3 is a monomer copolymerizable with the monomer m1 which is a monomer other than the monomer m1 and the monomer m2 whose copolymer with the monomer m1 is an elastic copolymer. One type of monomer m3 may be used alone, or two or more types thereof may be used in combination.

The proportion of the monomer m3 unit is preferably 20 mol% or less, more preferably 5 mol% or less, and particularly preferably 0 mol%, with respect to all units constituting the fluorine-containing elastomer B.

A monomer having a terminal functional group may be used as the monomer m3.

When synthesizing the fluorine-containing elastomer B having an iodine atom as a terminal functional group, the iodine atom can be introduced into a side group of the fluorine-containing elastomer B by using a monomer having an iodine atom.

Examples of the monomer having an iodine atom include iodoethylene, 4-iodo-3,3,4,4-tetrafluoro-1 -butene, 2-iodo-1,1,2,2-tetrafluoro-1-vinyloxyethane, 2-iodoethyl vinyl ether, allyl iodide, 1,1,2,3,3,3-hexafluoro-2-iodo-1-(perfluorovinyloxy)propane, 3,3,4,5,5,5-hexafluoro-4-iodopentene, iodotrifluoroethylene, and 2-iodoperfluoro(ethyl vinyl ether).

One type of the monomer having an iodine atom may be used alone, or two or more types thereof may be used in combination.

When synthesizing the fluorine-containing elastomer B having an epoxy group as a terminal functional group, the epoxy group can be introduced into a side group of the fluorine-containing elastomer B by using a monomer having an epoxy group.

Examples of the monomer having an epoxy group include glycidyl esters of (meth)acrylic acid such as glycidyl (meth)acrylate and β-methylglycidyl (meth)acrylate; allyl glycidyl ethers such as allyl glycidyl ether and allyl methyl glycidyl ether; and alicyclic epoxy group-containing vinyl-based monomers such as 3,4-epoxycyclohexyl acrylate and 3,4-epoxycyclohexyl methacrylate.

One type of the monomer having an epoxy group may be used alone, or two or more types thereof may be used in combination.

When synthesizing the fluorine-containing elastomer B having an acid anhydride group as a terminal functional group, the acid anhydride group can be introduced into a side group of the fluorine-containing elastomer B by using a monomer having an acid anhydride group.

Examples of the monomer having an acid anhydride group include itaconic anhydride, citraconic anhydride, 5-norbornene-2,3-dicarboxylic anhydride, and maleic anhydride.

One type of the monomer having an acid anhydride group may be used alone, or two or more types thereof may be used in combination.

In the fluorine-containing elastomer B having a terminal functional group, it is preferable that all units constituting the fluorine-containing elastomer B are composed of two or three types of monomer m1 units, or one or more types of monomer m1 units and one or more types of monomer m2 units. However, the fluorine-containing elastomer B may contain units other than these as impurities or the like, as long as they do not adversely affect the characteristics of the resin composition.

Examples of the fluorine-containing elastomer B having a terminal functional group include the following three types of copolymers.
- A copolymer having a TFE unit and a P unit.
- A copolymer having an HFP unit and a VdF unit (but excluding those having a P unit)- A copolymer having a TFE unit and a PAVE unit (but excluding those having a P unit or a VdF unit).

The total proportion of each unit specifically shown in these three types of copolymers is preferably 50 mol% or more with respect to all units constituting the copolymer.

Examples of the copolymer having a TFE unit and a P unit include the following copolymers. All of the copolymers exemplified below have a terminal functional group.

A copolymer composed of a TFE unit and a P unit,
a copolymer composed of a TFE unit, a P unit and a VF unit,
a copolymer composed of a TFE unit, a P unit and a VdF unit,
a copolymer composed of a TFE unit, a P unit and an E unit,
a copolymer composed of a TFE unit, a P unit and a TFP unit,
a copolymer composed of a TFE unit, a P unit and a PAVE unit,
a copolymer composed of a TFE unit, a P unit and a 1,3,3,3-tetrafluoropropene unit,
a copolymer composed of a TFE unit, a P unit and a 2,3,3,3-tetrafluoropropene unit,
a copolymer composed of a TFE unit, a P unit and a TrFE unit,
a copolymer composed of a TFE unit, a P unit and a DiFE unit,
a copolymer composed of a TFE unit, a P unit, a VdF unit and a TFP unit,
a copolymer composed of a TFE unit, a P unit, a VdF unit and a PAVE unit.

Among these, as the copolymer having a TFE unit and a P unit, a copolymer composed of a TFE unit and a P unit is preferred.

Examples of the copolymer having an HFP unit and a VdF unit include the following copolymers.

A copolymer composed of an HFP unit and a VdF unit,
a copolymer composed of a TFE unit, a VdF unit and an HFP unit,
a copolymer composed of a TFE unit, a VdF unit, an HFP unit and a TFP unit,
a copolymer composed of a TFE unit, a VdF unit, an HFP unit and a PAVE unit,
a copolymer composed of a VdF unit, an HFP unit and a TFP unit,
a copolymer composed of a VdF unit, an HFP unit and a PAVE unit.

Among these, as the copolymer having an HFP unit and a VdF unit, a copolymer composed of an HFP unit and a VdF unit is preferred.

Examples of the copolymer having a TFE unit and a PAVE unit include copolymers composed of a TFE unit and a PAVE unit. Among these, a copolymer composed of a TFE unit and a PMVE unit and a copolymer composed of a TFE unit, a PMVE unit and a PPVE unit are preferred, and a copolymer composed of a TFE unit and a PMVE unit is more preferred.

Other examples of the fluorine-containing elastomer B having a terminal functional group include the following.

A copolymer composed of a TFE unit, a VdF unit and a 2,3,3,3-tetrafluoropropene unit,
a copolymer composed of a VdF unit and a PAVE unit,
a copolymer composed of a VdF unit and a 2,3,3,3-tetrafluoropropene unit,
a copolymer composed of an E unit and an HFP unit.

The fluorine-containing elastomer B having a terminal functional group is preferably a copolymer having a TFE unit and a P unit, a copolymer having an HFP unit and a VdF unit, or a copolymer having a TFE unit and a PAVE unit, more preferably a copolymer having a TFE unit and a P unit, and particularly preferably a copolymer composed of a TFE unit and a P unit.

Since the copolymer composed of a TFE unit and a P unit exhibits favorable thermal stability during melt-kneading, the transportability during melt-kneading is stabilized. Further, coloring and foaming of the molded article are reduced.

The proportion of each unit constituting the fluorine-containing elastomer B having a terminal functional group is preferably within the following range from the viewpoint of easily contributing to the impact resistance of the molded article.

The molar ratio of each unit in the copolymer composed of a TFE unit and a P unit (hereinafter referred to as "TFE: P", and other molar ratios are also described in the same manner) is preferably 30 to 80: 70 to 20, more preferably 40 to 70: 60 to 30, and still more preferably 50 to 60: 50 to 40.

In the copolymer composed of a TFE unit, a P unit and a VF unit, TFE: P: VF is preferably 30 to 60: 60 to 20: 0.05 to 40.

In the copolymer composed of a TFE unit, a P unit and a VdF unit, TFE: P: VdF is preferably 30 to 60: 60 to 20: 0.05 to 40.

In the copolymer composed of a TFE unit, a P unit and an E unit, TFE: P: E is preferably 20 to 60: 70 to 30: 0.05 to 40.

In the copolymer composed of a TFE unit, a P unit and a TFP unit, TFE: P: TFP is preferably 30 to 60: 60 to 30: 0.05 to 20.

In the copolymer composed of a TFE unit, a P unit and a PAVE unit, TFE: P: PAVE is preferably 40 to 70: 60 to 29.95: 0.05 to 20.

In the copolymer composed of a TFE unit, a P unit and a 1,3,3,3-tetrafluoropropene unit, TFE: P: 1,3,3,3-tetrafluoropropene is preferably 30 to 60: 60 to 20: 0.05 to 40.

In the copolymer composed of a TFE unit, a P unit and a 2,3,3,3-tetrafluoropropene unit, TFE: P: 2,3,3,3-tetrafluoropropene is preferably 30 to 60: 60 to 20: 0.05 to 40.

In the copolymer composed of a TFE unit, a P unit and a TrFE unit, TFE: P: TrFE is preferably 30 to 60: 60 to 20: 0.05 to 40.

In the copolymer composed of a TFE unit, a P unit and a DiFE unit, TFE: P: DiFE is preferably 30 to 60: 60 to 20: 0.05 to 40.

In the copolymer composed of a TFE unit, a P unit, a VdF unit and a TFP unit, TFE: P: VdF: TFP is preferably 30 to 60: 60 to 20: 0.05 to 40: 0.05 to 20.

In the copolymer composed of a TFE unit, a P unit, a VdF unit and a PAVE unit, TFE: P: VdF: PAVE is preferably 30 to 70: 60 to 20: 0.05 to 40: 0.05 to 20.

In the copolymer composed of an HFP unit and a VdF unit, HFP: VdF is preferably 99 to 5: 1 to 95.

In the copolymer composed of a TFE unit, a VdF unit and an HFP unit, TFE: VdF: HFP is preferably 20 to 60: 1 to 40: 20 to 60.

In the copolymer composed of a TFE unit, a VdF unit, an HFP unit and a TFP unit, TFE: VdF: HFP: TFP is preferably 30 to 60: 0.05 to 40: 60 to 20: 0.05 to 20.

In the copolymer composed of a TFE unit, a VdF unit, an HFP unit and a PAVE unit, TFE: VdF: HFP: PAVE is preferably 30 to 70: 60 to 20: 0.05 to 40: 0.05 to 20.

In the copolymer composed of a VdF unit, an HFP unit and a TFP unit, VdF: HFP: TFP is preferably 1 to 90: 95 to 5: 0.05 to 20.

In the copolymer composed of a VdF unit, an HFP unit and a PAVE unit, VdF: HFP: PAVE is preferably 20 to 90: 9.95 to 70: 0.05 to 20.

In the copolymer composed of a TFE unit and a PAVE unit, TFE: PAVE is preferably 40 to 70: 60 to 30. In the case of a copolymer composed of a TFE unit and a PMVE unit, TFE: PMVE is preferably 40 to 70: 60 to 30.

In the copolymer composed of a TFE unit, a PMVE unit and a PPVE unit, TFE: PMVE: PPVE is preferably 40 to 70: 3 to 57: 3 to 57.

In the copolymer composed of a TFE unit, a VdF unit and a 2,3,3,3-tetrafluoropropene unit, TFE: VdF: 2,3,3,3-tetrafluoropropylene is preferably 1 to 30: 30 to 90: 5 to 60.

In the copolymer composed of a VdF unit and a PAVE unit, VdF: PAVE is preferably 3 to 95: 97 to 5.

In the copolymer composed of a VdF unit and a 2,3,3,3-tetrafluoropropene unit, VdF: 2,3,3,3-tetrafluoropropylene is preferably 30 to 95: 70 to 5.

In the copolymer composed of an E unit and an HFP unit, E: HFP is preferably 40 to 60: 60 to 40.

The fluorine content of the fluorine-containing elastomer B is preferably from 50 to 74% by mass, and more preferably from 55 to 70% by mass. The fluorine content is preferably from 57 to 60% by mass in a copolymer composed of a TFE unit and a P unit, preferably from 66 to 71% by mass in a copolymer composed of an HFP unit and a VdF unit, and preferably from 66 to 70% by mass in a copolymer composed of a TFE unit and a PMVE unit. When the fluorine content is equal to or more than the lower limit value of the above range, the resin composition and the molded article exhibit even better heat resistance and chemical resistance. When the fluorine content is equal to or less than the upper limit value of the above range, the resin composition and the molded article exhibit even better impact resistance.

The storage modulus G' of the fluorine-containing elastomer B is preferably from 80 to 800, more preferably from 100 to 800, and still more preferably from 120 to 600. A larger storage modulus G' indicates that the fluorine-containing elastomer B has a larger molecular weight and a higher density of molecular chain entanglement. When the storage modulus G' of the fluorine-containing elastomer B is within the above range, the molded article exhibits even better mechanical properties such as tensile strength.

The number average molecular weight of the fluorine-containing elastomer B is preferably from 10,000 to 1,500,000, more preferably from 20,000 to 1,000,000, still more preferably from 20,000 to 800,000, and particularly preferably from 50,000 to 600,000. When the number average molecular weight of the fluorine-containing elastomer B is equal to or more than the lower limit value of the above range, the molded article exhibits excellent impact resistance and mechanical properties. When the number average molecular weight of the fluorine-containing elastomer B is equal to or less than the upper limit value of the above range, the fluidity and dispersibility in a non-fluorine thermoplastic resin are excellent. As a result, flexibility is improved.

The Mooney viscosity (ML _{1 + 10}, 121°C) of the fluorine-containing elastomer B is preferably from 10 to 300, more preferably from 20 to 280, and still more preferably from 30 to 250. The Mooney viscosity is a measure of molecular weight. The larger the Mooney viscosity value, the larger the molecular weight. Further, the smaller the Mooney viscosity value, the smaller the molecular weight.

When the Mooney viscosity (ML _{1 + 10}, 121°C) of the fluorine-containing elastomer B is equal to or more than the lower limit value of the above range, the molded article exhibits excellent impact resistance and mechanical properties. When the Mooney viscosity (ML _{1 + 10}, 121°C) of the fluorine-containing elastomer B is equal to or less than the upper limit value of the above range, the fluidity and dispersibility in a non-fluorine thermoplastic resin are excellent. As a result, the resin composition exhibits excellent moldability.

One type of the fluorine-containing elastomer B may be used alone or two or more types thereof may be used in combination, and it is preferred to use one type alone.

The fluorine-containing elastomer B may be may be one which is commercially available, or may be one synthesized from various raw materials by various methods.

The fluorine-containing elastomer B can be synthesized, for example, by polymerizing at least one type of the monomer m1 and, if necessary, at least one of either or both of the monomers m2 and m3.

It is preferable to use a radical polymerization initiator during polymerization.

As the radical polymerization initiator, a compound having a half life of 10 hours at a temperature of 0 to 100°C is preferred, and a compound having the same half life at a temperature of 20 to 90°C is particularly preferred. Examples thereof include azo compounds (such as azobisisobutyronitrile), non-fluorinated diacyl peroxides (such as isobutyryl peroxide, octanoyl peroxide, benzoyl peroxide, and lauroyl peroxide), peroxydicarbonates (such as diisopropyl peroxydicarbonate), peroxy esters (such as tert-butyl peroxypivalate, tert-butyl peroxyisobutyrate, and tert-butyl peroxyacetate), fluorine-containing diacyl peroxides (such as the compound 2), and inorganic peroxides (such as potassium persulfate, sodium persulfate, and ammonium persulfate).

(Z(CF₂)ᵣCOO)₂ Formula 2

In the Formula 2, Z is a hydrogen atom, a fluorine atom, or a chlorine atom, and r is an integer from 1 to 10.

A chain transfer agent may be used during polymerization. Examples of the chain transfer agent include the following compound 3, the following compound 4, alcohols (such as methanol and ethanol), chlorofluorohydrocarbons (such as 1,3-dichloro-1,1,2,2,3-pentafluoropropane and 1,1-dichloro-1-fluoroethane), hydrocarbons (such as pentane, hexane, and cyclohexane), and mercaptans (such as tert-dodecyl mercaptan, and n-octadecyl mercaptan).

R¹I₂ Formula 3

R²IBr Formula 4

In the Formula 3, R¹ is an alkylene group or polyfluoroalkylene group having 2 or more carbon atoms.

In the Formula 4, R² is an alkylene group or polyfluoroalkylene group having 1 to 16 carbon atoms.

In R¹ and R², the polyfluoroalkylene group may be linear or branched. As R¹ and R², perfluoroalkylene groups are preferred.

Examples of the compound 3 include 1,4-diiodoperfluorobutane, 1,2-diiodoperfluoroethane, 1,3-diiodoperfluoropropane, 1,5-diiodoperfluoropentane, and 1,6-diiodoperfluoro hexane. Among them, 1,4-diiodoperfluorobutane is preferred.

Examples of the compound 4 include 1-iodo-4-bromoperfluorobutane, 1-iodo-4-bromoperfluorobutane, 1-iodo-6-bromoperfluorohexane, and 1-iodo-8-bromoperfluorooctane.

Iodine compounds such as the compound 3 and the compound 4 can function as chain transfer agents. Therefore, when each monomer is copolymerized in the presence of an iodine compound, an iodine atom can be bonded to the main chain end of the fluorine-containing elastomer B. When obtaining a fluorine-containing elastomer B having a branched chain, an iodine atom can also be bonded to the end of the branched chain in the same manner.

Examples of polymerization methods include an emulsion polymerization method, a solution polymerization method, a suspension polymerization method, and a bulk polymerization method. An emulsion polymerization method in which monomers are polymerized in the presence of an aqueous medium and an emulsifier is preferred, because the number average molecular weight and copolymer composition of the fluorine-containing elastomer B can be easily adjusted, and productivity is excellent.

As the radical polymerization initiator used for emulsion polymerization, a water-soluble initiator is preferred. Examples of the water-soluble initiator include persulfuric acid, hydrogen peroxide, water-soluble organic peroxides, organic initiators, redox initiators composed of a combination of persulfuric acid or hydrogen peroxide and a reducing agent, and inorganic initiators in which a small amount of iron, ferrous salt, silver sulfate, or the like further coexists with redox initiators.

Examples of the persulfuric acid include ammonium persulfate, sodium persulfate, and potassium persulfate.

Examples of the water-soluble organic peroxide include disuccinic acid peroxide, diglutaric acid peroxide, and tert-butyl hydroxyperoxide.

Examples of the organic initiator include azobisisobutyramidine dihydrochloride.

Examples of the reducing agent include sodium hydrogen sulfite and sodium thiosulfate.

In the emulsion polymerization method, monomers are polymerized in the presence of an aqueous medium, an emulsifier, and a radical polymerization initiator to obtain an elastomer latex. A pH adjuster may be used during monomer polymerization.

Examples of other components include inorganic fillers, polymer fillers, plasticizers, and flame retardants. One type of other components may be used alone, or two or more types thereof may be used in combination.

Examples of inorganic fillers include glass fibers, carbon fibers, graphite, graphene, carbon nanotubes, gypsum fibers, mica, talc, glass flakes, wollastonite, potassium titanate, aluminum borate, boron nitride, aluminum nitride, calcium carbonate, silicon oxide (silica), titanium oxide, barium sulfate, zinc oxide, aluminum hydroxide, magnesium hydroxide, clay, white carbon, carbon black, inorganic pigments, molybdenum disulfide, metal powders, magnetic materials, and zeolite.

Examples of the glass fibers include chopped fibers, milled fibers, and flat glass fibers with modified cross sections. Further, glass fibers having a low dielectric constant can also be used from the viewpoint of electrical properties.

Examples of the carbon fibers include PAN-based carbon fibers, pitch-based isotropic carbon fibers, and pitch-based anisotropic carbon fibers. Regarding the shape of the carbon fiber, a chopped fiber or a milled fiber can be selected depending on the desired physical properties.

Examples of the carbon black include furnace black, acetylene black, thermal black, and channel black. Among these, furnace black is preferred. Examples of the furnace black include HAF-LS carbon, HAF carbon, HAF-HS carbon, FEF carbon, GPF carbon, APF carbon, SRF-LM carbon, SRF-HM carbon, and MT carbon. Among them, MT carbon is preferred.

The shape of the inorganic filler is not particularly limited, and may be a fibrous form, a plate-like form or a particulate form (including a spherical form). A fibrous form is preferred from the viewpoints of mechanical properties and friction and wear characteristics. In applications in which a molded article is required to have an isotropic property, a plate-like inorganic filler or a particulate inorganic filler is preferred. The size of the inorganic filler is not particularly limited. Any of nano-sized, micrometer-sized and millimeter-sized inorganic fillers can be used depending on the purpose of the molded article.

Examples of the polymer filler include a liquid crystal polymer, a polycarbonate, a polyethylene terephthalate, a polybutylene terephthalate, a polyester elastomer, a polyarylate, a polycaprolactone, a phenoxy resin, a polysulfone, a polyimide, a polyamide 6, a polyamide 66, a polyamide 11, a polyamide 12, a polyamide 610, a polyamide 46, an aromatic polyamide, a polyamide elastomer, a polyphenylene oxide, a polytetrafluoroethylene, an acrylonitrile-butadiene-styrene copolymer (ABS resin), a polymethyl methacrylate, a polypropylene, a polyethylene, a polybutadiene, a butadiene-styrene copolymer, an ethylene-propylene-diene rubber (EPDM), a styrene-butadiene block copolymer, a butadiene-acrylonitrile copolymer, an acrylic rubber, a styrene-maleic anhydride copolymer, a styrene-phenylmaleimide copolymer, an ethylene/acrylic acid/glycidyl methacrylate copolymer, a silicone elastomer, and an aramid. Among them, a polytetrafluoroethylene is suitably used when lowering the dielectric constant and dielectric loss tangent of the molded article.

Examples of the plasticizer include phthalic acid esters and adipic acid esters.

Examples of the flame retardant include aluminum hydroxide, magnesium hydroxide, magnesium carbonate, antimony trioxide, sodium antimonate, antimony pentoxide, phosphazene compounds, phosphoric acid esters, ammonium polyphosphate, melamine/melam/melem polyphosphate, red phosphorus, molybdenum compounds, boric acid compounds, and polytetrafluoroethylene.

Examples of the phosphoric acid ester include triphenyl phosphate, tricresyl phosphate, trixylenyl phosphate, cresyl phenyl phosphate, and 2-ethylhexyl diphenyl phosphate.

A weld line is generally a groove formed when a plurality of types of resins of resin in a molten state join together and then solidify in the cavity of a mold used for thermoforming. This weld line remains even after molding and causes rupture starting from the weld line. Therefore, strengthening the weld line is important.

The inventors of the present invention found that the weld strength decreases when the thermoplastic resin A and the fluorine-containing elastomer B are melt molded. In order to solve this problem, the inventors of the present invention came up with the idea of increasing the compatibility between the thermoplastic resin A and the fluorine-containing elastomer B by reducing the difference in melt viscosity between the thermoplastic resin A and the fluorine-containing elastomer B. It is thought that if the compatibility between the thermoplastic resin A and the fluorine-containing elastomer B increases, the depth of the weld line groove becomes shallower, and the weld strength improves.

Therefore, in the resin composition of the present invention, a ratio of a melt flow rate MFR_{A} of the thermoplastic resin A at a temperature of 372°C and a load of 49N and a melt flow rate MFR_{B} of the fluorine-containing elastomer B at a temperature of 230°C and a load of 21N (MFR_{A}/MFR_{B}) is preferably 300 or less, more preferably from 0.05 to 200, still more preferably from 0.1 to 100, and most preferably from 0.2 to 10.

When the MFR_{A}/MFR_{B} ratio is equal to or more than the lower limit value of the above numerical range, it is easy to select and determine the combination of thermoplastic resin A and fluorine-containing elastomer B, and the raw materials are easy to obtain.

When the MFR_{A}/MFR_{B} ratio is equal to or less than the upper limit value of the above numerical range, the difference in melt viscosity between the thermoplastic resin A and the fluorine-containing elastomer B is small. Therefore, it is thought that the compatibility between the thermoplastic resin A and the fluorine-containing elastomer B is improved, and the effect of improving the weld strength is more likely to be obtained. Further, the resin composition exhibits even better moldability.

In order to set the MFR_{A}/MFR_{B} ratio within the above range, it is preferable that MFR_{A} is from 1 to 200 g/10 min and MFR_{B} is from 2 to 170 g/10 min, and it is more preferable that MFR_{A} is from 3 to 150 g/10 min and MFR_{B} is from 5 to 100 g/min. Examples of the thermoplastic resin A having an MFR_{A} within the above range include VESTAKEEP2000G, VESTAKEEP1000G, VESTAKEEP5000G, VESTAKEEP4000G, and VESTAKEEP3300G manufactured by Daicel-Evonik Ltd. Examples of the fluorine-containing elastomer B having an MFR_{B} within the above range include a fluorine-containing elastomer B2 used in Examples described later.

The weld strength is preferably 48 MPa or more, more preferably 55 MPa or more, and still more preferably 58 MPa or more. When the weld strength is equal to or more than the lower limit value of the above numerical range, the strength of the weld line is sufficient. The higher the weld strength, the better, and the upper limit value is not particularly limited. The upper limit value of weld strength is, for example, 120 MPa.

The melt flow rate of the resin composition of the present invention at a temperature of 372°C and a load of 49N is preferably 1 g/10 min or more, more preferably from 3 to 180 g/10 min, and still more preferably from 10 to 150 g/10 min.

When the melt flow rate of the resin composition is equal to or higher than the lower limit value of the above numerical range, fluidity during thermoforming is high, and the resin composition exhibits even better moldability.

When the melt flow rate of the resin composition is equal to or lower than the upper limit value of the above numerical range, it is easy to maintain an appropriate melt viscosity during thermoforming.

In the resin composition of the present invention, the tensile strength when formed into a test piece with a thickness of 4.0 mm is preferably 45 MPa or more, more preferably 50 MPa or more, and still more preferably 55 MPa or more. When the tensile strength is equal to or more than the above lower limit value, the mechanical properties of the molded article are further improved. The upper limit value of the tensile strength is not particularly limited.

In the resin composition of the present invention, the tensile elongation when formed into a test piece with a thickness of 4.0 mm is preferably 8% or more, more preferably 10% or more, and still more preferably 15% or more. When the tensile elongation is equal to or more than the above lower limit value, the mechanical properties of the molded article are further improved. The upper limit value of the tensile elongation is not particularly limited.

In the resin composition of the present invention, the flexural strength when formed into a test piece with a thickness of 4.0 mm is preferably 80 MPa or more, more preferably 100 MPa or more, and still more preferably 120 MPa or more. When the flexural strength is equal to or more than the above lower limit value, the mechanical properties of the molded article are further improved. The upper limit value of the flexural strength is not particularly limited. The upper limit value of the flexural strength is, for example, 200 MPa.

In the resin composition of the present invention, the flexural modulus when formed into a test piece with a thickness of 4.0 mm is preferably 1,800 MPa or more, more preferably 2,000 MPa or more, and still more preferably 2,200 MPa or more. When the flexural modulus is equal to or more than the above lower limit value, the mechanical properties of the molded article are further improved. The upper limit value of the flexural modulus is not particularly limited. The upper limit value of the flexural modulus is, for example, 4,000 MPa.

In the resin composition of the present invention, the Izod impact strength at 23°C when formed into a test piece with a thickness of 4.0 mm is preferably 80 J/m or more, more preferably 90 J/m or more, and still more preferably 100 J/m or more. When the Izod impact strength at 23°C is equal to or more than the above lower limit value, the molded article exhibits excellent impact resistance at normal temperature. The upper limit value of the Izod impact strength at 23°C is not particularly limited, and is, for example, NB (No break).

In the resin composition of the present invention, the Izod impact strength at - 40°C when formed into a test piece with a thickness of 4.0 mm is preferably 50 J/m or more, more preferably 55 J/m or more, and still more preferably 60 J/m or more. When the Izod impact strength at -40°C is equal to or more than the above lower limit value, the impact resistance of the molded article at low temperatures is further improved. The upper limit value of the Izod impact strength at -40°C is not particularly limited, and is, for example, NB (No break).

The resin composition of the present invention can be produced by melt-kneading the thermoplastic resin A, the fluorine-containing elastomer B, and other components as necessary.

In a case where other components are blended in the resin composition, such other components may be added when melt-kneading the thermoplastic resin A and the fluorine-containing elastomer B, or may be added after melt-kneading the thermoplastic resin A and the fluorine-containing elastomer B.

The fluorine-containing elastomer B before melt-kneading is preferably in the form of crumbs from the viewpoint of ease of handling during compound production.

The number average particle diameter of the fluorine-containing elastomer B before melt-kneading is preferably 10 mm or less, more preferably 8 mm or less, and still more preferably 6 mm or less. When the number average particle diameter of the fluorine-containing elastomer B before melt-kneading is within the above range, the transportability by a screw during melt-kneading is stabilized.

The volume ratio of the thermoplastic resin A and the fluorine-containing elastomer B in melt-kneading is the same as the volume ratio of the thermoplastic resin A and the fluorine-containing elastomer B in the resin composition. When the proportion of the volume of the thermoplastic resin A and the proportion of the volume of the fluorine-containing elastomer B are within the above-mentioned ranges, the appearance of the strand obtained during melt-kneading is less rough. As a result, the obtained pellets exhibit excellent melt moldability. In addition, if the proportion of the volume of the thermoplastic resin A and the proportion of the volume of the fluorine-containing elastomer B are within the above-mentioned ranges, and the proportion of the volume of the thermoplastic resin A is contained within the above range, it is easy to obtain a molded article excellent in heat resistance, mechanical properties, flexibility, and impact resistance.

Examples of the melt-kneading device include various devices having a melt-kneading function. The melt-kneading device is preferably a single screw extruder or a twin screw extruder which may be equipped with a screw having a high kneading effect, more preferably a twin screw extruder, and particularly preferably a twin screw extruder equipped with a screw having a high kneading effect. As the screw having a high kneading effect, it is possible to select one having a sufficient kneading effect with respect to an object to be melt-kneaded and not applying an excessive shearing force. Examples of the melt-kneading device include a Labo Plastomill kneader (manufactured by Toyo Seiki Seisaku-sho, Ltd.).

As a method for supplying the thermoplastic resin A and the fluorine-containing elastomer B to the melt-kneading device, the thermoplastic resin A and the fluorine-containing elastomer B may be mixed in advance and supplied to the melt-kneading device, or the thermoplastic resin A and the fluorine-containing elastomer B may be separately supplied to the melt-kneading device.

In a case where other components are blended in the resin composition, such other components may be mixed in advance with one of the thermoplastic resin A and the fluorine-containing elastomer B and supplied to the melt-kneading device, or may be supplied to the melt-kneading device separately from the thermoplastic resin A and the fluorine-containing elastomer B. Further, other components may be added after melt-kneading the thermoplastic resin A and the fluorine-containing elastomer B.

The melt-kneading is preferably carried out so that particles of the fluorine-containing elastomer B having a number average particle diameter of 0.5 to 10 µm are dispersed in the thermoplastic resin A. By appropriately adjusting the melt-kneading temperature, the extrusion shear rate, and the residence time of the object to be melt-kneaded in the melt-kneading device, it is possible to disperse the particles of the fluorine-containing elastomer B having a number average particle diameter of 0.5 to 10 µm in the thermoplastic resin A.

The melt-kneading temperature is preferably set depending on the thermoplastic resin A and the fluorine-containing elastomer B. For example, the melt-kneading temperature is preferably from 220 to 480°C, more preferably from 280 to 450°C, still more preferably from 290 to 420°C, and particularly preferably from 300 to 400°C.

When the melt-kneading temperature is equal to or higher than the lower limit value of the above numerical range, the fluorine-containing elastomer B is easily dispersed in the thermoplastic resin A, and coarse particles of the fluorine-containing elastomer B are less likely to remain. When the melt-kneading temperature is equal to or lower than the upper limit value of the above numerical range, thermal decomposition of the fluorine-containing elastomer B is less likely to be promoted, the heat resistance of the resin composition is further improved, and the particle size of the fluorine-containing elastomer B does not become too small.

The extrusion shear rate during melt-kneading is preferably set depending on the melt viscosity of the object to be melt-kneaded at the melt-kneading temperature. For example, the extrusion shear rate during melt-kneading is preferably from 3 to 2,500 sec⁻¹, more preferably from 10 to 2,000 sec⁻¹, and still more preferably from 15 to 1,500 sec⁻1

When the extrusion shear rate is equal to or more than the lower limit value of the above numerical range, the fluorine-containing elastomer B is easily dispersed in the thermoplastic resin A, and coarse particles of the fluorine-containing elastomer B are less likely to remain. When the extrusion shear rate is equal to or less than the upper limit value of the above numerical range, the particle size of the fluorine-containing elastomer B does not become too small.

The residence time of the object to be melt-kneaded in the melt-kneading device is preferably from 10 to 290 seconds, more preferably from 20 to 240 seconds, and still more preferably from 30 to 210 seconds.

When the residence time of the object to be melt-kneaded in the melt-kneading device is equal to or more than the lower limit value of the above numerical range, the fluorine-containing elastomer B is easily dispersed in the thermoplastic resin A, and coarse particles of the fluorine-containing elastomer B are less likely to remain. When the residence time is equal to or less than the upper limit value of the above numerical range, thermal decomposition of the fluorine-containing elastomer B is less likely to be promoted.

In one example, the melt-kneading is preferably carried out in the substantial absence of a crosslinking agent and crosslinking aid. The above description "melt-kneading being carried out in the substantial absence of a crosslinking agent and a crosslinking aid" means that the melt-kneading is carried out without substantially crosslinking the fluorine-containing elastomer B in the resin composition. Whether or not the fluorine-containing elastomer B in the resin composition is not substantially crosslinked can be confirmed by the value of the flexural modulus of the resin composition. When the fluorine-containing elastomer B is substantially crosslinked, since the flexibility due to the fluorine-containing elastomer B is lost, the flexural modulus exceeds 3.7 GPa.

When the melt-kneading is carried out in the substantial absence of a crosslinking agent and a crosslinking aid, it is possible to ensure the flexibility of the fluorine-containing elastomer B in the resin composition and to improve the impact resistance of the molded article.

However, in other examples, the melt-kneading may be carried out in the presence of a crosslinking agent and a crosslinking aid. When the melt-kneading is carried out in the presence of a crosslinking agent and a crosslinking aid, the crosslinking agent and the crosslinking aid may be used in amounts within a range that can ensure the thermoplasticity of the resin composition.

### (Mechanism of action)

The resin composition of the present invention described above exhibits excellent moldability because the fluorine-containing elastomer B having a terminal functional group is dispersed in the thermoplastic resin A. In addition, since the volume ratio of the thermoplastic resin A and the fluorine-containing elastomer B is from 99:1 to 50:50, a molded article with excellent impact resistance can be obtained.

### (Use)

The resin composition of the present invention can also be made into a powder from and used as a coating material. Examples of applications of coated articles include those described in International Patent Publication No. 2015/182702.

Further, the resin composition of the present invention is also useful as an additive for fiber-reinforced resin molded articles and as a matrix resin for prepregs.

The reinforcing fibers used in the fiber-reinforced resin molded articles and prepregs are not particularly limited. Examples thereof include various inorganic fibers, various metal fibers, and various organic fibers.

### <Molded article>

The molded article of the present invention is obtained by molding the resin composition of the present invention. Since the molded article of the present invention exhibits excellent impact resistance, it can be suitably applied to various applications requiring impact resistance.

The molding method is not particularly limited. Various molding methods can be applied. Examples thereof include a melt molding method and an additive manufacturing method.

Examples of the melt molding method include an injection molding method, an extrusion molding method, and a press molding method (thermoforming method).

Examples of the injection molding method include a general injection molding method, a high-speed injection molding method, a multicolor molding method, a coinjection molding method, an injection compression molding method, a gas-assisted injection molding method, a foam injection molding method (MuCell), a heat and cool molding method using a rapidly heated mold, an insert molding method, and an in-mold decoration molding method.

Examples of the extrusion molding method include a film sheet molding method using a T-die, a tube molding method using a circular die, a profile extrusion molding method, a melt spinning method, and a blow molding method for molding hollow parts. A multilayer molded article having two or more layers or a multilayer fiber having a core-sheath structure may be obtained by the extrusion molding method.

The press molding method is a method of thermoforming a single layer or multilayer sheet.

As an additive manufacturing method, molding methods called 3D printing and additive manufacturing are widely used. Examples thereof include a fused deposition modeling method and a selective laser sintering method.

The cylinder temperature in the extruder is preferably from 280 to 420°C, more preferably from 300 to 420°C, and still more preferably from 330 to 370°C. The die temperature is preferably from 350 to 420°C, and more preferably from 350 to 380°C. If the temperature is within the above range, the frictional stress between the molten resin and the die is reduced, and the surface smoothness of an extrusion molded article is excellent. In addition, decomposition of the resin due to thermal history during molding is suppressed, and the surface smoothness of the extrusion molded article is further improved.

The extrusion shear rate in the extruder is preferably from 3 to 2,500 sec⁻¹, more preferably from 10 to 1,000 sec⁻¹, and still more preferably from 10 to 100 sec⁻¹.

The residence time of the resin composition in the extruder is preferably from 10 to 1,000 seconds, and more preferably from 60 to 500 seconds.

The molded article of the present invention may be used as a composite obtained by combination or lamination with other materials other than the molded article of the present invention. Examples of other materials include metals, glasses, plastics, and rubbers.

Examples of plastics include those described in International Patent Publication No. 2015/182702, liquid crystal polymers, polyarylketones, polyethersulfones, polyphenylsulfones, polyacetals, polyurethanes, and polyamides. Examples of the polyamide include polyamide 6, polyamide 66, polyamide 46, polyamide 11, polyamide 12, polyamide 610, polyamide 612, polyamide 6/66 copolymers, polyamide 6/66/610 copolymers, polyamide MXD6, polyamide 6T, polyamide 9T, and polyamide 6/6T copolymers.

Forms and applications of molded articles and composites include, for example, casings (such as housings) of portable electronic devices, connecting members of portable electronic devices, sliding members, three-dimensional circuit components, gears, actuators, pistons, bearings, aircraft interior materials, bushes, tubes (for fuel, and the like), hoses, tanks, seals, wires, insulation coating materials for electric wires (such as wires and cables), films, sheets, bottles, and fibers.

Examples of the portable electronic devices include mobile phones, portable terminals, laptop computers, tablet computers, radios, cameras, camera accessories, watches, calculators, music players, global positioning system (GPS) receivers, mobile games, hard drives, portable recording devices, portable playback devices, and portable radio receivers.

Examples of the form of the casing of the portable electronic device include a back cover, front cover, antenna housing, frame, and backbone of the portable electronic device. The casing may be a member composed of a single component of the molded article of the present invention, or a member composed of a plurality of components. Here, the backbone is a member to which components of the portable electronic device such as electronics, microprocessors, screens, keyboards, keypads, antennas, and battery sockets are attached.

When the casing is present inside the portable electronic device, the casing may not be visible from the outside of the portable electronic device, or may be partially visible from the outside of the portable electronic device. A casing such as a cover for protecting and supporting an internal structure may be exposed to the outside of the portable electronic device.

Examples of the forms of connecting members of portable electronic devices include snap-type connectors between circuit boards, microphones, speakers, displays, batteries, covers, electrical connectors, electronic connectors, hinges, antennas, switches, and switch pads of the portable electronic device. The connecting member can be suitably applied to portable electronic devices such as mobile phones, portable terminals (PDAs), music storage devices, eavesdropping devices, portable DVD players, electric multimeters, portable electronic game machines, and portable personal computers (for example, notebook computers, and the like).

The three-dimensional circuit component is a component obtained by forming a circuit pattern on the surface of a resin component molded into a three-dimensional shape, and is used as an antenna component of a portable electronic device or a component of an in-vehicle electronic device. As a method for forming a circuit pattern, a laser direct structuring (LDS) method is used in which a circuit pattern is etched with a laser, followed by plating.

Examples of applications of tubes, hoses, tanks, seals, and wires include the applications described in International Patent Publication No. 2015/182702. Further, examples of applications of tubes and hoses include tubes used for drilling operations for energy resources such as petroleum, natural gas, and shale oil.

Examples of applications of the insulation coating material for electric wires include insulation coating materials for electric wires for motor coils or rectangular copper wires, particularly rectangular conductors in drive motors of hybrid electric vehicles (HEVs) and electric vehicles (EVs). Examples of the form of the insulation coating material for the rectangular conductor include a film.

Examples of applications of the insulation coating material for electric wires also include insulation coating materials for downhole cables used for drilling operations for energy resources (such as petroleum, natural gas, and shale oil). Among these, insulation coating materials for downhole cables for oil-well drilling are preferred.

Examples of applications of films and sheets include speaker diaphragms, plates for trauma and fractures, insulating paper such as adhesive tapes for various electrical insulations (such as insulating paper for motors), sealing tapes and the like for oil and natural gas pipes, and mold release films.

When the molded article is a film, examples of applications thereof include speaker diaphragms provided with films, films for coating electric wires, flexible printed circuit boards, rigid substrates, coverlays, housings for electronic devices, heat-resistant rolls for OA equipment, and films for film impregnation of other fiber composite materials. The thickness of the film is preferably from 1 to 100 µm, more preferably from 2 to 80 µm, and still more preferably from 5 to 50 µm. When the thickness of the film is equal to or more than the lower limit value of the above range, the strength of the film is improved. When the thickness of the film is equal to or less than the upper limit value of the above range, the film exhibits excellent handling properties.

When the molded article is a tube, examples of applications thereof include medical catheters equipped with tubes, electric wire coatings, and piping for analytical instruments.

When the molded article is a fiber, examples of applications thereof include protective clothing and various filters.

### [Examples]

The present invention will be described below in detail with reference to Examples. However, the present invention is not limited to the following description.

Cases 2, 5, 8, 11, 13, 15, 17, 19, and 21 are Examples of the present invention.

Cases 1, 3, 4, 6, 7, 9, 10, 12, 14, 16, 18, 20, and 22 to 24 are Comparative Examples.

### <Measurement method>

### (Melting point)

Using a differential scanning calorimeter (manufactured by Seiko Instruments Inc.), the melting peak when a thermoplastic resin was heated at a rate of 10°C/min was recorded, and the temperature corresponding to the local maximum value was taken as the melting point.

### (Melt flow rates of resin composition and thermoplastic resin A: MFR, MFR_{A})

They were determined using a melt indexer (manufactured by Technol Seven Co., Ltd.) in accordance with JIS K 7210-1:2014 (corresponding international standard: ISO 1133-1:2011) under conditions of a temperature of 372°C and a load of 49N.

### (Melt flow rate of fluorine-containing elastomer B: MFR_{B})

It was determined using a melt indexer (manufactured by Technol Seven Co., Ltd.) in accordance with JIS K 7210-1:2014 (corresponding international standard: ISO 1133-1:2011) under conditions of a temperature of 230°C and a load of 21N.

### (Mooney viscosity (ML_{1 + 10}, 121°C))

It was measured at 121°C using SMV-201 (manufactured by Shimadzu Corporation) in accordance with JIS K 6300-1:2000 (corresponding international standards: ISO 289-1:2005, ISO 289-2:1994).

### (Storage modulus G')

It was measured using RPA 2000 (manufactured by Alpha Technologies) under conditions of 100°C and 50 cpm in accordance with ASTM D6204.

### (Production of injection molded article for evaluation)

A pelletized resin composition was pre-dried for 3 hours under heating at 200°C. Subsequently, the resin composition was injection molded using an injection molding machine (ROBOSHOT α-50, manufactured by Fanuc Corporation) under the conditions of a cylinder temperature of 380°C and a mold temperature of 170°C to obtain an injection molded article having a thickness of 4.0 mm for evaluation.

### (Tensile strength, tensile elongation)

With respect to the injection molded article for evaluation, the tensile strength and tensile elongation were measured by using TENSILON (model: RTF-1350, manufactured by A & D Co., Ltd.) at a load cell rating of 10 kN, a distance between chucks of 115 mm and a rate of 50 mm/min in accordance with JIS K7161 (corresponding international standard: ISO 527-1:2012).

### (Flexural strength, flexural modulus)

A test piece having a length of 80 mm and a width of 10 mm was cut out from the injection molded article for evaluation. With respect to the test piece, the flexural modulus and flexural strength were measured by using TENSILON (RTF-1350, manufactured by A & D Co., Ltd.) at a load cell rating of 10 kN, a distance between fulcrums of 64 mm and a rate of 2 mm/min in accordance with JIS K7171 (corresponding international standard: ISO 527-1:2012).

### (Izod impact strength)

A test piece having a length of 80 mm and a width of 10 mm was cut out from the injection molded article for evaluation, and a notch was made at a height of 40 mm in the test piece.

With respect to the test piece, using an Izod tester (manufactured by Toyo Seiki Seisaku-sho, Ltd.), the Izod impact strength was measured under the conditions of a hammer capacity of 2.75 J, a hammer load of 13.97 N, a distance from the shaft center to the center of gravity of 10.54 cm, and a distance from the shaft center to the impact point of 33.5 cm. The measurements were carried out at 23°C and -40°C. The measurement result at 23°C was defined as "Izod impact strength (room temperature)". The measurement result at -40°C was defined as "Izod impact strength (low temperature)".

### (Weld strength)

A pelletized resin composition was pre-dried for 3 hours under heating at 200°C. Subsequently, the resin composition was injection molded using an injection molding machine (ROBOSHOT α-50, manufactured by Fanuc Corporation) and an injection molding die for weld strength measurement under the conditions of a cylinder temperature of 380°C and a mold temperature of 170°C to obtain a test piece having a sample size of 1B in accordance with ISO527. With respect to this test piece, the measurement was carried out in accordance with ISO527 by using a Tensilon universal testing machine RTF-1350 (manufactured by A & D Co., Ltd.).

### (Production of insulated wire)

As a rectangular conductor, a rectangular copper wire (oxygen-free copper, 1.5 mm (height) × 2.3 mm (width)) manufactured by FCM Co., Ltd. was used. An insulated wire was obtained by covering the periphery of a rectangular copper wire with an extrusion molded article of a resin composition. An insulated wire was obtained so that the thickness accuracy of the electric wire diameter was ± 0.03 mm by using an electric wire extrusion molding machine equipped with the following electric wire extruder, screw, electric wire die crosshead, electric wire take-up machine and winding machine during covering. The extrusion molding conditions were set to a die temperature of 350°C and a cylinder temperature of 280 to 350°C.
- Electric wire extruder: MS30-25 extruder manufactured by IKG Corporation
- Screw: full flight type manufactured by IKG Corporation, L/D = 24 (L is the length from the beginning of the screw thread under the hopper opening to the tip, and D is the screw diameter, which is 30 mm.)
- Electric wire die crosshead: manufactured by Unitec Co., Ltd., maximum conductor diameter: 3 mm, maximum die hole diameter: 20 mm
- Electric wire take-up machine, and winding machine: manufactured by Hijiri Manufacturing Ltd.

### (Stress crack resistance)

The insulated wire was bent and deformed in the edgewise direction and flatwise direction, respectively. The deformation angle was set to 90 ± 10°. Thereafter, a covering layer of the insulated wire was visually observed, and the stress crack resistance was evaluated based on the following criteria.

A: No cracks occurred in the covering layer even when it was deformed in either bending direction of the edgewise direction and the flatwise direction.

B: Cracks occurred in the covering layer when deformed in at least one of the bending directions.

### <Materials>

### (Thermoplastic resin A)

- Thermoplastic resin A1: PEEK (manufactured by Daicel-Evonik Ltd., product name "VESTAKEEP3300G", melting point: 340°C, MFR_{A}: 20.5 g/10 min, specific gravity: 1.32).
- Thermoplastic resin A2: PEEK (manufactured by Daicel-Evonik Ltd., product name "VESTAKEEP1000G", melting point: 340°C, MFR_{A}: 142 g/10 min, specific gravity: 1.32).
- Thermoplastic resin A3: PEEK (manufactured by Daicel-Evonik Ltd., product name "VESTAKEEP2000G", melting point: 340°C, MFR_{A}: 64 g/10 min, specific gravity: 1.32).

### (Fluorine-containing elastomer B)

- Fluorine-containing elastomer B1: a fluorine-containing elastomer having a (TFE unit): (P unit) ratio of 56:44 with no terminal functional group, MFR_{B}: unmeasurable (< 1 g/10 min), specific gravity: 1.55, Mooney viscosity (ML_{1 + 10}), 121°C): n/a, storage modulus G': 550).
- Fluorine-containing elastomer B2: a fluorine-containing elastomer having a (TFE unit): (P unit) ratio of 56:44 and having 0.4% by mass of iodine atoms with respect to the mass of the fluorine-containing elastomer as terminal functional groups, MFR_{B}: 59.9 g/ 10 min, specific gravity: 1.55, Mooney viscosity (ML_{1 + 10}, 121°C): 50, storage modulus G': 250).
- Fluorine-containing elastomer B3: a fluorine-containing elastomer having a (TFE unit): (P unit) ratio of 56:44 with no terminal functional group, MFR_{B}: unmeasurable (< 1 g/10 min), specific gravity: 1.55, Mooney viscosity (ML_{1 + 10}), 121°C): 100, storage modulus G': 390).

### <Cases 1 to 10>

The thermoplastic resin A1 and the fluorine-containing elastomer B1, the fluorine-containing elastomer B2, or the fluorine-containing elastomer B3 were mixed at a volume ratio shown in Table 1. This mixture was loaded at the base end of the screw of a twin screw extruder (manufactured by Technovel Corporation, KZW32TW-45MG-NH (-1500), screw diameter: 32 mmϕ, L/D: 45) using a feeder so that the flow rate was 15.0 kg/hour. The strand extruded from the tip of the die under the following conditions (screw rotation speed: 200 rpm; set temperatures of cylinder, die and head: C1 = 340°C, C2 = 360°C, C3 = 370°C, C4 = 370°C, C5 = 370°C, C6 = 370°C, AD = 350°C, H = 360°C) was air-cooled and cut with a pelletizer to obtain pellets of the resin composition. When it was difficult to form a strand, the strand was cooled with water instead of air and cut with a pelletizer to obtain pellets of the resin composition. The evaluation results are shown in Table 1.

### <Cases 11 to 16>

Resin compositions were obtained in the same manner as in Cases 1 to 10, with the exception that the thermoplastic resin A2 was used instead of the thermoplastic resin A1. The evaluation results are shown in Table 1.

### <Cases 17 to 22>

Resin compositions were obtained in the same manner as in Cases 1 to 10, with the exception that the thermoplastic resin A3 was used instead of the thermoplastic resin A1. The evaluation results are shown in Table 1.

### <Cases 23 and 24>

Resin compositions were obtained in the same manner as in Cases 1 to 10, with the exception that the thermoplastic resin A1 and the thermoplastic resin A3 were each used alone. The evaluation results are shown in Table 1.

**[Table 1]**

| | Thermoplastic resin A | | | Flnorine-containing elastomer B | | | MFR of resin composition | MFR_{A}/MFR_{B} | Specific gravity | Tensile strength | Tensile elongation | Flexural strength | Flexural modulus | Izod impact strength | Izod impact strength | Weld strength | Stress crack resistance |
|---|---|---|---|---|---|---|---|---|---|---|---|---|---|---|---|---|---|
| | [% by volume] | | | [% by volume] | | | [g/10min] | [-] | | [MPa] | [%] | [MPa] | [MPa] | (room temperature) | (low temperature) | [MPa] | |
| | A1 | A2 | A3 | B1 | B2 | B3 | | | | | | | | [J/m] | [J/m] | | |
| Case 1 | 90 | - | - | 10 | - | - | 18.6 | 20.5 | 1.31 | 66.4 | 51.7 | 119.1 | 3044.0 | 179.9 | 115.0 | 53.8 | - |
| Case 2 | 90 | - | - | - | 10 | - | 26.5 | 0.3 | 1.31 | 64.0 | 21.1 | 120.0 | 3047.7 | 178.9 | 113.5 | 66.2 | A |
| Case 3 | 90 | - | - | - | - | 10 | 19.8 | 20.5 | 1.31 | 65.2 | 37.8 | 116.6 | 3021.7 | 176.5 | 113.2 | 47.3 | - |
| Case 4 | 80 | - | - | 20 | - | - | 17.0 | 20.5 | 1.32 | 58.6 | 44.4 | 100.8 | 2609.5 | 278.5 | 110.4 | 30.0 | - |
| Case 5 | 80 | - | - | - | 20 | - | 37.4 | 0.3 | 1.32 | 56.7 | 9.3 | 60.1 | 2267.4 | 161.4 | 94.8 | 11.6 | A |
| Case 6 | 80 | - | - | - | - | 20 | 17.5 | 20.5 | 1.32 | 57.7 | 46.8 | 101.9 | 2739.6 | 282.2 | 107.9 | 31.0 | - |
| Case 7 | 70 | - | - | 30 | - | - | 15.8 | 20.5 | 1.34 | 49.3 | 43.9 | 82.1 | 2217.4 | 329.9 | 88.3 | 17.7 | - |
| Case 8 | 70 | - | - | - | 30 | - | 71.8 | 0.3 | - | - | - | - | - | - | - | - | - |
| Case 9 | 70 | - | - | - | - | 30 | 16.5 | 20.5 | 1.34 | 48.0 | 56.8 | 83.1 | 2301.5 | 287.2 | 97.7 | 15.1 | - |
| Case 10 | 80 | - | - | - | - | 20 | 19.6 | 20.5 | 1.32 | 59.3 | 46.5 | 104.8 | 2661.9 | 284.8 | 113.1 | 28.2 | - |
| Case 11 | - | 90 | - | - | 10 | - | - | 2.4 | 1.32 | 64.7 | 17.6 | 122.9 | 3077.7 | 101.9 | 64.2 | 73.0 | - |
| Case 12 | - | 90 | - | - | - | 10 | 133.5 | 142.0 | 1.31 | 63.7 | 21.6 | 127.5 | 3197.7 | 105.4 | 66.9 | 54.9 | - |
| Case 13 | - | 80 | - | - | 20 | - | 192.0 | 2.4 | 1.32 | 63.0 | 9.3 | 101.5 | 2641.5 | 109.7 | 77.5 | 58.2 | A |
| Case 14 | - | 80 | - | - | - | 20 | 127.0 | 142.0 | 1.33 | 59.3 | 29.8 | 98.8 | 2551.7 | 83.0 | 80.6 | 37.2 | B |
| Case 15 | - | 70 | - | - | 30 | - | 166.0 | 2.4 | 1.34 | 53.8 | 14.3 | 85.4 | 2370.0 | 115.3 | 52.2 | 47.4 | - |
| Case 16 | - | 70 | - | - | - | 30 | 100.5 | 142.0 | 1.34 | 49.2 | 31.6 | 75.2 | 1976.6 | 76.9 | 65.9 | 27.5 | - |
| Case 17 | - | - | 90 | - | 10 | - | 92.3 | 1.1 | 1.31 | 64.4 | 24.2 | 124.9 | 3109.0 | 122.1 | 95.7 | 71.3 | A |
| Case 18 | - | - | 90 | - | - | 10 | 63.1 | 64.0 | 1.31 | 64.4 | 26.1 | 123.8 | 3072.9 | 105.4 | 90.1 | 52.2 | B |
| Case 19 | - | - | 80 | - | 20 | - | 123.4 | 1.1 | 1.32 | 54.3 | 16.0 | 104.5 | 2708.1 | 134.7 | 90.9 | 49.7 | A |
| Case 20 | - | - | 80 | - | - | 20 | 57.0 | 64.0 | 1.32 | 57.0 | 35.5 | 100.6 | 2560.2 | 113.1 | 98.3 | 36.6 | B |
| Case 21 | - | - | 70 | - | 30 | - | - | 1.1 | - | - | - | - | - | - | - | - | A |
| Case 22 | - | - | 70 | - | - | 30 | 49.8 | 64.0 | 1.34 | 49.4 | 52.8 | 79.4 | 2127.4 | 130.1 | 85.2 | 25.2 | B |
| Case 23 | - | - | 100 | - | - | - | 63.9 | - | 1.30 | 68.9 | 24.6 | 151.3 | 3669.2 | 56.3 | 49.9 | 96.9 | - |
| Case 24 | 100 | - | - | - | - | - | 20.5 | - | 1.29 | 73.1 | 17.0 | 142.5 | 3503.3 | 86.0 | 105.5 | 92.2 | - |

In Table 1, the symbol "-" indicates that the material in the corresponding column was not used, and also indicates that the physical property values in the corresponding column were not measured or evaluated.

In Case 2 in which the fluorine-containing elastomer B2 having a terminal functional group was used, the MFR of the resin composition was higher than in Cases 1 and 3, resulting in excellent moldability. Further, the effect of improving the weld strength was also obtained.

In Case 5 in which the fluorine-containing elastomer B2 having a terminal functional group was used, the MFR of the resin composition was higher than in Cases 4 and 6, resulting in excellent moldability.

In Case 8 in which the fluorine-containing elastomer B2 having a terminal functional group was used, the MFR of the resin composition was higher than in Cases 7 and 9, resulting in excellent moldability.

In Case 11 in which the fluorine-containing elastomer B2 having a terminal functional group was used, the effect of improving the weld strength was obtained, as compared with Case 12.

In Case 13 in which the fluorine-containing elastomer B2 having a terminal functional group was used, the MFR of the resin composition was higher than in Case 14, resulting in excellent moldability. Further, the effect of improving the weld strength was also obtained.

In Case 15 in which the fluorine-containing elastomer B2 having a terminal functional group was used, the MFR of the resin composition was higher than in Case 16, resulting in excellent moldability. Further, the effect of improving the weld strength was also obtained.

In Case 17 in which the fluorine-containing elastomer B2 having a terminal functional group was used, the MFR of the resin composition was higher than in Case 18, resulting in excellent moldability. Further, the effect of improving the weld strength was also obtained.

In Case 19 in which the fluorine-containing elastomer B2 having a terminal functional group was used, the MFR of the resin composition was higher than in Case 20, resulting in excellent moldability. Further, the effect of improving the weld strength was also obtained.

Regarding the impact resistance, the Izod impact strengths at room temperature in Cases 2 and 5 were higher than in Case 24, and molded articles with excellent impact resistance were obtained. Further, the Izod impact strengths at room temperature and low temperature in Cases 17 and 19 were higher than in Case 23, and molded articles with excellent impact resistance were obtained. Also in Cases 11, 13, and 15, the Izod impact strength at room temperature showed a sufficiently high value for practical use, and molded articles with excellent impact resistance were obtained.

Regarding the stress crack resistance, in Cases 13, 17, 19, and 21 in which the fluorine-containing elastomer B2 having a terminal functional group was used, the results showed superior stress crack resistance, as compared to those in Cases 14, 18, 20, and 22, respectively. Cases 2 and 5 also resulted in excellent stress crack resistance.

### [Industrial Applicability]

According to the resin composition of the present invention, a molded article with excellent impact resistance can be obtained. Further, the resin composition of the present invention exhibits excellent moldability.

The molded article of the present invention exhibits excellent impact resistance. Further, the molded article of the present invention also exhibits excellent stress crack resistance.

The composite of the present invention comprises a molded article excellent in impact resistance and stress crack resistance.

Priority is claimed on Japanese Patent Application No. 2022-003102, filed on January 12, 2022, the content of which is incorporated herein by reference.

## Claims

1. A resin composition comprising: the following thermoplastic resin A and a fluorine-containing elastomer B having a terminal functional group;
wherein a volume ratio of said thermoplastic resin A and said fluorine-containing elastomer B is from 99:1 to 50:50; and
said fluorine-containing elastomer B is dispersed in said thermoplastic resin A.
(Thermoplastic resin A)
A melt-moldable heat-resistant thermoplastic resin of at least one member selected from the group consisting of polyarylate, polyether sulfone, polyaryl sulfone, aromatic polyetheramide, aromatic polyetherimide, polyphenylene sulfide, polyaryletherketone, polyamideimide, and liquid crystal polyesters.

2. The resin composition according to Claim 1,
wherein said thermoplastic resin A is at least one selected from the group consisting of polyphenylene sulfide and polyaryletherketone.

3. The resin composition according to Claim 1,
wherein said terminal functional group is at least one selected from the group consisting of an iodine atom, an epoxy group, and an acid anhydride group.

4. The resin composition according to Claim 1, wherein a volume ratio of said thermoplastic resin A and said fluorine-containing elastomer B is from 95:5 to 60:40.

5. The resin composition according to Claim 1,
wherein a melt flow rate MFR of said resin composition is 1 g/10 minutes or more at a temperature of 372°C and a load of 49 N.

6. The resin composition according to Claim 1,
wherein a ratio of a melt flow rate MFR_{A} of the thermoplastic resin A at a temperature of 372°C and a load of 49N and a melt flow rate MFR_{B} of the fluorine-containing elastomer B at a temperature of 230°C and a load of 21N (MFR_{A}/MFR_{B}) is 300 or less.

7. The resin composition according to Claim 1, which has a weld strength of 48 MPa or more.

8. A molded article obtained by molding the resin composition according to any one of Claims 1 to 7.

9. A composite obtained by combining or laminating the molded article according to Claim 8 and another material other than said molded article.
